# EUROPEAN PATENT SPECIFICATION

(11) **EP 1 762 746 B1**
(45) Date of publication and mention of the grant of the patent: **06.07.2011**
(21) Application number: 06120276.8
(22) Date of filing: 07.09.2006
(51) Int. Cl.: F16D 66/00, B60T 17/22

(54) **Brake monitoring and control system**
Bremsüberwachungsanordnung und Regelsystem
Dispositif de contrôle des freins et système de commande

(30) Priority: 07.09.2005 US 221283
(43) Date of publication of application: 14.03.2007
(73) Proprietor: Haldex Brake Products Aktiebolag, 261 24 Landskrona (SE)
(72) Inventor:
(74) Representative: Petri, Stellan

(56) References cited:
- EP-A1- 0 924 128
- EP-A2- 1 124 073
- DE-A1- 19 826 053
- DE-A1- 19 858 764

## Description

### Field of the Invention

The present invention relates generally to vehicle disc brakes, and more specifically, to a system and method for electrically monitoring the status of one or more disc brakes and using such status information to control the one or more disc brakes.

### Background of the Invention

Virtually all wheeled vehicles utilize braking systems to selectively inhibit wheel rotation and, therefore, reduce vehicle speed. Braking may be accomplished by the use of a disc braking system whereby a friction force is applied at one or more wheel assemblies to inhibit wheel rotation. Numerous disc brake systems are known in the art. Typically, the vehicle operator would generate a brake signal through a pedal thereby activating the disc brake system. The system generally includes a rotor or disc secured to the vehicle wheel, a caliper assembly mounted to the vehicle chassis, and a pair of friction pads (also called brake pads or brake linings) disposed on opposite sides of the rotor. Upon activation of the disc brake system, the friction pads are moved toward one another into frictional engagement with the rotor thereby actuating the braking force and slowing the vehicle.

Repeated braking actuation eventually leads to a wearing of the friction pads and an overall reduction in thickness. Disc brake systems are designed to accommodate certain levels of wear by compensating for reductions in pad thickness. Continued pad wear, however, may lead to mechanical problems such as reduced braking efficiency and damage to the rotor and/or caliper assemblies. To overcome this, strategies have been developed to monitor friction pad wear and to alert the vehicle operator of excessive pad wear and potential mechanical problems.

Early systems for monitoring brake pad wear relied upon some type of physical contact between system components once a portion of the wear monitoring system had been worn away and a predetermined brake pad distance had been traveled.

U.S. Patent No. 4,850,454 to Korody is an example of such a disc brake lining wear system. In the Korody patent, a wear sensor comprises a plastic encapsulated sensor having a support bracket that is attached to the support member of the disc brake. As the inner and outer linings wear, a peripheral portion of the inner brake pad is displaced axially by the caliper piston. The peripheral portion wears away the sensor surface and engages a metal conductor to complete a circuit. In this manner, the inner brake pad wears away the sensor and completes the warning circuit.

U.S. Patent No. 4,606,435 to Johnson is another example of a brake lining wear sensor and indicator circuit which relies upon physical contact of system components. In the Johnson patent, the brake lining wear sensor includes a metal contact secured to a grounded brake lining support plate. When the brake lining is not worn, a semiconductive ceramic bushing establishes an electrical resistance between the contact and the support plate. When the brake lining is worn, the contact touches a grounded brake rotor or drum thereby causing a short to ground. Furthermore, the sensor is coupled by a lead wire to an indicator circuit that tests for resistance values to determine whether the contact is electrically grounded to the rotor.

While these patents may disclose strategies for determining the brake lining wear status and relaying this information via an indicator apparatus, they suffer from a number of disadvantages. The systems disclosed in the above patents generally require that the sensor is either associated with or part of the friction pad(s), and/or has a portion worn away along with the friction pad. This may increase maintenance and manufacturing costs by increasing parts and installation time.

More recent wear indicator systems generally do not rely upon a sensor which is either associated with or part of the friction pad(s), and/or has a portion worn away along with the friction pad.

For example, U.S. Patent No. 5,697,472 to Walker et al. discloses an indicating apparatus designed to determine the amount of wear that has occurred in the friction material of a brake assembly or other friction coupling. The apparatus utilizes a pin member that is positioned in a sealed bore in the housing of the friction coupling. A first end portion of the pin member is positioned for contact and movement of an actuating piston when the piston is in an engaged position. The distance between a second end portion of the pin member, housed within the bore, and an outer surface of the housing may be determined by a depth gage. Measurements may be taken to determine movement of the pin member within the bore and thereby establish the amount of wear of the friction material.

U.S. Patent No. 5,632,359 to Camps et al. discloses a wear indicator for a disc brake having a caliper that slides in a carrier to apply friction pads against a disc. The wear indicator comprises a continuous variation sensor, such as a capacitive sensor, connected to a monitor. The capacitive sensor has first and second electrodes having a variable overlap area. A guide pin for the caliper forms the first electrode. As the guide pin moves during a brake application, the monitor periodically measures the overlap area to define a current operational output signal which is compared with a predetermined signal and when the comparison differs from a normal result a failure signal is provided to indicate that the disc brake in not properly operating.

U.S. Patent No. 6,481,539 to Shaw et al. discloses a system and method for monitoring brake pad wear which provides a vehicle disc brake caliper assembly including a boot assembly and at least one friction pad. The system further provides at least one caliper bolt including a caliper bolt switch point, the caliper bolt movably positioned within the boot assembly. A conductive element is positioned a predetermined distance from the caliper bolt switch point. An electrical circuit is switched when the conductive element contacts the switch point. The contact is established when the friction pad wears to a predetermined level corresponding to the predetermined distance. The method provides a caliper bolt including a caliper bolt switch point. A conductive element is positioned a predetermined distance from the caliper bolt switch point. The predetermined distance is progressively decreased as the brake pad wears. An electrical circuit is switched when the conductive element contacts the caliper bolt switch point.

While the systems disclosed in the Walker et al., Camps et al. and Shaw et al. patents may obviate some of the problems associated with the systems disclosed in the Korody and Johnson patents, they suffer from disadvantages of their own. One such disadvantage is that the systems are complex, and are therefore likely prone to failure and/or expensive to install and maintain. A further disadvantage of all of the systems discussed above is that they all require additional components which do not already form part of the braking system. It would be far more desirable from complexity, reliability and cost standpoints if the wear system relied upon components which were already part of the brake system. This is particularly true in the case of electrically actuated braking systems which are becoming more common, and which already include all components which are required for a pad wear monitoring system to function.

It is also desirable that the pad wear indicator system further includes brake adjustment functionality to compensate for brake pad wear. U.S. Patent No. 6,276,494 to Ward et al. discloses such a system. More specifically, the Ward et al. patent discloses a vehicle brake assembly of the kind that comprises actuating means for applying the brake linings to a brake rotor, adjusting means adapted to be driven by the actuating means for the purpose of maintaining the brake linings in close proximity to the brake rotor, and wear sensing means responsive to actuation movement of the brake in a brake-applying direction. The wear sensing means comprises a sensor adapted to be operated by movement of an operating member in a linear direction, a rotatable follower member responsive to movement of the adjusting means, and a transmission mechanism for translating rotary movement of the follower member into linear movement of the operating member. The brake includes re-set means for resetting the relationship between a datum for the sensing means and the brake during servicing of the brake. The re-set means may comprise means for adjusting the effective length of the operating member.

Similarly, U.S. Patent No. 6,390,244 to Sitter discloses a brake wear indicator to provide visual and tactile indication of unacceptable brake wear. The brake wear indicator has a hub drive attached to a cam shaft, a brake wear disc attached to the hub drive and a body attached to a slack adjuster lever. The brake wear disc has a wear detector lug. The body has two travel limit lugs which extend towards the centerline of the brake wear disc and are on the end of flexible fingers. When the brake linings are approaching unacceptable wear, the wear detector lug contacts one of the travel limit lugs and pushes the travel limit lug and the end of the corresponding finger away from the adjacent outer surface of the body. The rising of the end of the finger above the adjacent surface provides visual and tactile indication of unacceptable brake wear.

While both of the Ward et al. patent and the Sitter patent disclose pad wear indicator systems which further include brake adjustment functionality to compensate for brake pad wear, the systems suffer from a number of disadvantages similar to those described above in connection with the pad wear indicator systems. More specifically, the brake adjustment portions of the systems disclosed in the Ward et al. patent and the Sitter patent are complex, and are therefore likely prone to failure and/or expensive to install and maintain. A further disadvantage of the brake adjustment portions of the systems disclosed in the Ward et al. patent and the Sitter patent is that they require additional components which do not already form part of the braking system. It would be far more desirable from complexity, reliability and cost standpoints if the brake adjustment functionality relied upon components which were already part of the brake system. This is particularly true in the case of electrically actuated braking systems which are becoming more common, and which already include all components which are required for brake adjustment functionality.

What is desired, therefore, is a brake monitoring and control system which includes brake pad wear indicator functionality, which does not employ a brake pad wear sensor that is either associated with or part of the friction pad(s) and/or has a portion worn away along with the friction pad, which includes brake adjustment functionality to compensate for brake pad wear, which is not relatively complex and therefore not likely prone to failure and/or expensive to install and maintain, which does not require additional components that do not already form part of the braking system, and which is compatible with electrically actuated braking systems.

Document DE 198 26 053 A1 discloses a brake monitoring and control system according to the preamble of claim 1.

### Summary of the Invention

Accordingly, it is an object of the present invention to provide a brake monitoring and control system which includes brake pad wear indicator functionality.

Another object of the present invention is to provide a brake monitoring and control system having the above characteristics and which does not employ a brake pad wear sensor that is either associated with or part of the friction pad(s) and/or has a portion worn away along with the friction pad.

A further object of the present invention is to provide a brake monitoring and control system having the above characteristics and which includes brake adjustment functionality to compensate for brake pad wear.

Still another object of the present invention is to provide a brake monitoring and control system having the above characteristics and which is not relatively complex and therefore not likely prone to failure and/or expensive to install and maintain.

Yet a further object of the present invention is to provide a brake monitoring and control system having the above characteristics and which does not require additional components that do not already form part of the braking system.

Still yet another object of the present invention is to provide a brake monitoring and control system having the above characteristics and which is compatible with electrically actuated braking systems

These and other objects of the present invention are achieved in accordance with the brake monitoring and control system according to claim 1.

In certain of these embodiments, the electronic control unit calculates the compensation signal based at least in part upon a difference between the angular position of the motor when the brake pad is in the applied position and the angular reference position of the motor, less the angular displacement of the motor which creates the desired pad gap.

In some embodiments, a difference between the angular position of the motor when the brake pad is in the applied position and the angular position of the motor when the brake pad is in the unapplied position defines a desired pad gap. In some embodiments, a difference between the angular position of the motor when the brake pad is in the unapplied position and the angular reference position of the motor defines an excess pad gap. In certain of these embodiments, the compensation signal corresponds to the excess pad gap. In some embodiments, the motor position sensor is integral with the motor. In some embodiments, the applied position of the brake pad comprises a position of the brake pad when a calibration level of clamping force is exerted.

In some embodiments, the motor causes the brake pad to be located in the unapplied position in response to the compensation signal by selective engagement of a clutch disposed between the motor and an adjuster mechanism. In certain of these embodiments, the electronic control unit calculates the compensation signal further based at least in part upon a position of at least a portion of the adjuster mechanism. In certain of these embodiments, a sensor is provided for detecting the position of at least a portion of the adjuster mechanism.

In some embodiments, the system further comprises friction indicative signals indicative of a level of friction between the brake pad and the brake disc when the brake is applied, and wherein the electronic control unit evaluates a quality of the brake pad based at least in part upon the friction indicative signals. In some embodiments, the system further comprises a temperature sensor which generates temperature indicative signals indicative of a temperature of the brake pad, and wherein the electronic control unit evaluates a quality of the brake pad based at least in part upon the temperature indicative signals. In some embodiments, the motor causes the brake pad to move to a ready position when braking is anticipated. In some embodiments, the electronic control unit calculates or adjusts the compensation signal based at least in part upon a sensed temperature within the system.

In some embodiments, the system further comprises a motor current sensor which generates motor current indicative signals indicative of a level of current passing through the motor when the brake is applied, and wherein the electronic control unit evaluates a quality of the brake pad based at least in part upon the motor position indicative signals and the motor current indicative signals. In some embodiments, the electronic control unit compares the compensation signal with an expected compensation signal stored in a memory in order to evaluate whether a brake failure has occurred.

In some embodiments, the system further comprises a clamping force sensor which generates clamping force indicative signals indicative of a clamping force exerted by the brake pad on the brake disc, and wherein the electronic control unit receives the motor position indicative signals and the clamping force indicative signals when the brake is applied and determines an extent of wear of the brake pad based at least in part upon a relationship between the motor position indicative signals and the clamping force indicative signals.

In accordance with a further embodiment of the present invention, a brake monitoring and control system includes a brake pad adapted to frictionally engage a brake disc when the brake is applied, an adjusting motor operatively attached to the brake pad, the adjusting motor causing the brake pad to be located in an unapplied position in response to a compensation signal, a brake application motor operatively attached to the brake pad, the brake application motor and causing the brake pad to move to an applied position in response to a control signal, and an electronic control unit in communication with the adjusting motor and the brake application motor. The electronic control unit receives, from at least one of an adjusting motor position sensor and a brake application motor sensor, motor position indicative signals indicative of an angular position of at least one of the adjusting motor and the brake application motor when the brake pad is in the applied position, and calculates the compensation signal based at least in part upon the motor position indicative signals.

In some embodiments, the electronic control unit calculates the compensation signal further based at least in part upon an angular displacement of at least one of the adjusting motor and the brake application motor relative to the angular position of thereof when the brake pad is in the applied position, which angular displacement is of an extent necessary to create a desired pad gap between the brake pad and the disc. In certain of these embodiments, the electronic control unit calculates the compensation signal further based at least in part upon an angular reference position of the at least one of the adjusting motor and the brake application motor. In certain of these embodiments, the electronic control unit calculates the compensation signal based at least in part upon a difference between the angular position of at least one of the adjusting motor and the brake application motor when the brake pad is in the applied position and the angular reference position thereof, less the angular displacement of the at least one of the adjusting motor and the brake application motor which creates the desired pad gap.

In some embodiments, a difference between the angular position of at least one of the adjusting motor and the brake application motor when the brake pad is in the applied position and the angular position thereof when the brake pad is in the unapplied position defines a desired pad gap. In certain of these embodiments, a difference between the angular position of at least one of the adjusting motor and the brake application motor when the brake pad is in the unapplied position and the angular reference position thereof defines an excess pad gap. In certain of these embodiments, the compensation signal corresponds to the excess pad gap. In some embodiments, the adjusting motor position sensor is integral with the adjusting motor and the brake application motor sensor is integral with the brake application motor. In some embodiments, the applied position of the brake pad comprises a position of the brake pad when a calibration level of clamping force is exerted.

In some embodiments, the system further comprises friction indicative signals indicative of a level of friction between the brake pad and the brake disc when the brake is applied, and the electronic control unit evaluates a quality of the brake pad based at least in part upon the friction indicative signals. In some embodiments, the system further comprises a temperature sensor which generates temperature indicative signals indicative of a temperature of the brake pad, and the electronic control unit evaluates a quality of the brake pad based at least in part upon the temperature indicative signals.
In some embodiments, the motor causes the brake pad to move to a ready position when braking is anticipated. In some embodiments, the electronic control unit calculates or adjusts the compensation signal based at least in part upon a sensed temperature within the system.

In some embodiments, the system further comprises a motor current sensor which generates motor current indicative signals indicative of a level of current passing through the brake application motor when the brake is applied, and the electronic control unit evaluates a quality of the brake pad based at least in part upon the motor position indicative signals and the motor current indicative signals. In some embodiments, the electronic control unit compares the compensation signal with an expected compensation signal stored in a memory in order to evaluate whether a brake failure has occurred. In some embodiments, the system further includes a clamping force sensor which generates clamping force indicative signals indicative of a clamping force exerted by the brake pad on the brake disc, and the electronic control unit receives the motor position indicative signals and the clamping force indicative signals when the brake is applied and determines an extent of wear of the brake pad based at least in part upon a relationship between the motor position indicative signals and the clamping force indicative signals.

In accordance with another embodiment of the present invention, a brake monitoring and control system comprises a brake pad adapted to frictionally engage a brake disc when the brake is applied, a position sensor which generates position indicative signals indicative of a position of the brake pad with respect to the brake disc, a clamping force sensor which generates clamping force indicative signals indicative of a clamping force exerted by the brake pad on the brake disc, and an electronic control unit. The electronic control unit receives the position indicative signals and the clamping force indicative signals when the brake is applied and determines an extent of wear of the brake pad based at least in part upon a relationship between the position indicative signals and the clamping force indicative signals.

In some embodiments, the electronic control unit compares the relationship between the received position indicative signals and the clamping force indicative signals with at least one relationship stored in a memory in order to determine an extent of wear of the brake pad. In some embodiments, the electronic control unit receives first position indicative signals and first clamping force indicative signals when the brake is applied to a first extent and determines a first relationship between the first position indicative signals and the first clamping force indicative signals, receives second position indicative signals and second clamping force indicative signals when the brake is applied to a second extent and determines a second relationship between the second position indicative signals and the second clamping force indicative signals, and determines an extent of wear of the brake pad based at least in part upon a relationship between the first relationship and the second relationship.

In some embodiments, the system further comprises a motor operatively attached to the brake pad, the motor causing the brake pad to be applied in response to a control signal, and wherein the position indicative signals indicative of a position of the brake pad with respect to the brake disc comprise motor position signals indicative of an angular position of the motor. In certain of these embodiments, the motor causes the brake pad to be located in an unapplied position in response to a compensation signal and causes the brake pad to move to an applied position in response to a control signal, and wherein the electronic control unit receives the motor position indicative signals indicative of an angular position of the motor when the brake pad is in the applied position from the motor position sensor, and calculates the compensation signal based at least in part upon the angular position of the motor when the brake pad is in the applied position.

In some embodiments, the system further includes an adjusting motor operatively attached to the brake pad, the adjusting motor causing the brake pad to be located in an unapplied position in response to a compensation signal and a brake application motor operatively attached to the brake pad, the brake application motor and causing the brake pad to move to an applied position in response to a control signal. In these embodiments, the electronic control unit is in communication with the adjusting motor and the brake application motor, the electronic control unit receiving, from at least one of an adjusting motor position sensor and a brake application motor sensor, motor position indicative signals indicative of an angular position of at least one of the adjusting motor and the brake application motor when the brake pad is in the applied position, and calculating the compensation signal based at least in part upon the motor position indicative signals.

In some embodiments, the system further comprises friction indicative signals indicative of a level of friction between the brake pad and the brake disc when the brake is applied, and wherein the electronic control unit evaluates a quality of the brake pad based at least in part upon the friction indicative signals. In certain of these embodiments, the electronic control unit evaluates the quality of the brake pad by comparing the friction indicative signals to at least one level of friction stored in a memory. In some embodiments, the system further comprises a temperature sensor which generates temperature indicative signals indicative of a temperature of the brake pad, and wherein the electronic control unit evaluates a quality of the brake pad based at least in part upon the temperature indicative signals. In certain of these embodiments, the electronic control unit evaluates the quality of the brake pad by comparing the temperature indicative signals to at least one temperature stored in a memory.

In some embodiments, the system further comprises a motor current sensor which generates motor current indicative signals indicative of a level of current passing through the motor when the brake is applied, and wherein the electronic control unit evaluates a quality of the brake pad based at least in part upon the motor position indicative signals and the motor current indicative signals. In some embodiments, the electronic control unit compares the extent of wear with an expected extent of wear stored in a memory in order to evaluate whether a brake failure has occurred.

In accordance with another embodiment of the present invention, a brake monitoring and control system comprises a brake pad adapted to frictionally engage a brake disc when the brake is applied, a motor operatively attached to the brake pad, the motor causing the brake pad to be located in an unapplied position in response to a compensation signal and causing the brake pad to move to an applied position in response to a control signal, a motor position sensor which generates motor position indicative signals indicative of an angular position of the motor, a clamping force sensor which generates clamping force indicative signals indicative of a clamping force exerted by the brake pad on the brake disc, and an electronic control unit in communication with the motor. The electronic control unit receives the motor position indicative signals and the clamping force indicative signals when the brake is in the applied position, calculates the compensation signal based at least in part upon the angular position of the motor when the brake pad is in the applied position, and determines an extent of wear of the brake pad based at least in part upon a relationship between the position indicative signals and the clamping force indicative signals.

In accordance with another aspect of the present invention, there is provided a method for brake monitoring and control according to claim 18. brake pad to move to an applied position in response to a control signal, receiving, from a motor position sensor, motor position indicative signals indicative of an angular position of the motor when the brake pad is in the applied position, and calculating the compensation signal based at least in part upon the angular position of the motor when the brake pad is in the applied position.

In certain of these embodiments, the compensation signal is calculated based at least in part upon a difference between the angular position of the motor when the brake pad is in the applied position and the angular reference position of the motor, less the angular displacement of the motor which creates the desired pad gap.

In some embodiments, a difference between the angular position of the motor when the brake pad is in the applied position and the angular position of the motor when the brake pad is in the unapplied position defines a desired pad gap. In certain of these embodiments, a difference between the angular position of the motor when the brake pad is in the unapplied position and the angular reference position of the motor defines an excess pad gap. In certain of these embodiments, the compensation signal corresponds to the excess pad gap. In some embodiments, the motor position sensor is integral with the motor. In some embodiments, the applied position of the brake pad comprises a position of the brake pad when a calibration level of clamping force is exerted.

In some embodiments, the motor causes the brake pad to be located in the unapplied position in response to the compensation signal by selective engagement of a clutch disposed between the motor and an adjuster mechanism. In certain of these embodiments, the electronic control unit calculates the compensation signal further based at least in part upon a position of at least a portion of the adjuster mechanism. In certain of these embodiments, a sensor is provided for detecting the position of at least a portion of the adjuster mechanism.

In some embodiments, the method further comprises the steps of generating friction indicative signals indicative of a level of friction between the brake pad and the brake disc when the brake is applied, and evaluating a quality of the brake pad based at least in part upon the friction indicative signals. In some embodiments, the method further comprises the steps of generating temperature indicative signals indicative of a temperature of the brake pad, and evaluating a quality of the brake pad based at least in part upon the temperature indicative signals. In some embodiments, the motor causes the brake pad to move to a ready position when braking is anticipated. In some embodiments, the electronic control unit calculates or adjusts the compensation signal based at least in part upon a sensed temperature within the system.

In some embodiments, the method further comprises the steps of generating motor current indicative signals indicative of a level of current passing through the motor when the brake is applied, and evaluating a quality of the brake pad based at least in part upon the motor position indicative signals and the motor current indicative signals. In some embodiments, the method further comprises the step of comparing the compensation signal with an expected compensation signal stored in a memory in order to evaluate whether a brake failure has occurred.

In some embodiments, the method further comprises the steps of generating clamping force indicative signals indicative of a clamping force exerted by the brake pad on the brake disc, and receiving the motor position indicative signals and the clamping force indicative signals when the brake is applied and determining an extent of wear of the brake pad based at least in part upon a relationship between the motor position indicative signals and the clamping force indicative signals.

In accordance with another embodiment of the present invention, a method for brake monitoring and control comprises the steps of providing a brake pad adapted to frictionally engage a brake disc when the brake is applied, generating, with a position sensor, position indicative signals indicative of a position of the brake pad with respect to the brake disc, generating, with a clamping force sensor, clamping force indicative signals indicative of a clamping force exerted by the brake pad on the brake disc, receiving the position indicative signals and the clamping force indicative signals when the brake is applied, and determining an extent of wear of the brake pad based at least in part upon a relationship between the position indicative signals and the clamping force indicative signals.

In some embodiments, the determining step comprises the step of comparing the relationship between the received position indicative signals and the clamping force indicative signals with at least one relationship stored in a memory. In some embodiments, the receiving step comprises the steps of receiving first position indicative signals and first clamping force indicative signals when the brake is applied to a first extent and determining a first relationship between the first position indicative signals and the first clamping force indicative signals, and receiving second position indicative signals and second clamping force indicative signals when the brake is applied to a second extent and determining a second relationship between the second position indicative signals and the second clamping force indicative signals, and wherein the determining step comprises the step of determining an extent of wear of the brake pad based at least in part upon a relationship between the first relationship and the second relationship.

In some embodiments, the method further comprises the steps of providing a motor operatively attached to the brake pad, the motor causing the brake pad to be applied in response to a control signal, and wherein the position indicative signals indicative of a position of the brake pad with respect to the brake disc comprise motor position signals indicative of an angular position of the motor. In certain of these embodiments, the motor causes the brake pad to be located in an unapplied position in response to a compensation signal and causes the brake pad to move to an applied position in response to a control signal, and the method further comprises the steps of receiving the motor position indicative signals indicative of an angular position of the motor when the brake pad is in the applied position from the motor position sensor, and calculating the compensation signal based at least in part upon the angular position of the motor when the brake pad is in the applied position.

In some embodiments, the method further comprises the steps of generating friction indicative signals indicative of a level of friction between the brake pad and the brake disc when the brake is applied, and evaluating a quality of the brake pad based at least in part upon the friction indicative signals. In certain of these embodiments, the evaluating step comprises the step of comparing the friction indicative signals to at least one level of friction stored in a memory. In some embodiments, the method further comprises the steps of generating temperature indicative signals indicative of a temperature of the brake pad, and evaluating a quality of the brake pad based at least in part upon the temperature indicative signals. In certain of these embodiments, the quality of the brake pad is evaluated by comparing the temperature indicative signals to at least one temperature stored in a memory.

In some embodiments, the method further comprises the steps of generating motor current indicative signals indicative of a level of current passing through the motor when the brake is applied, and evaluating a quality of the brake pad based at least in part upon the motor position indicative signals and the motor current indicative signals. In certain embodiments, the method further comprises the step of comparing the extent of wear with an expected extent of wear stored in a memory in order to evaluate whether a brake failure has occurred.

In accordance with another embodiment of the present invention, a method for brake monitoring and control comprises the steps of providing a brake pad adapted to frictionally engage a brake disc when the brake is applied, providing a motor operatively attached to the brake pad, the motor causing the brake pad to be located in an unapplied position in response to a compensation signal and causing the brake pad to move to an applied position in response to a control signal, generating, with a motor position sensor, motor position indicative signals indicative of an angular position of the motor, generating, with a clamping force sensor, clamping force indicative signals indicative of a clamping force exerted by the brake pad on the brake disc, receiving the motor position indicative signals and the clamping force indicative signals when the brake is in the applied position, calculating the compensation signal based at least in part upon the angular position of the motor when the brake pad is in the applied position, and determining an extent of wear of the brake pad based at least in part upon a relationship between the position indicative signals and the clamping force indicative signals.

The invention and its particular features and advantages will become more apparent from the following detailed description considered with reference to the accompanying drawings.

### Brief Description of the Drawings

**Figure 1** is schematic view of a brake monitoring and control system in accordance with an embodiment of the present invention;

**Figure 2** is a graph of clamping force versus stroke distance showing brake application and illustrating several facets of operation of the brake monitoring and control system of Figure 1; and

**Figure 3** is schematic view of a brake monitoring and control system in accordance with another embodiment of the present invention.

### Detailed Description of an Embodiment of the Invention

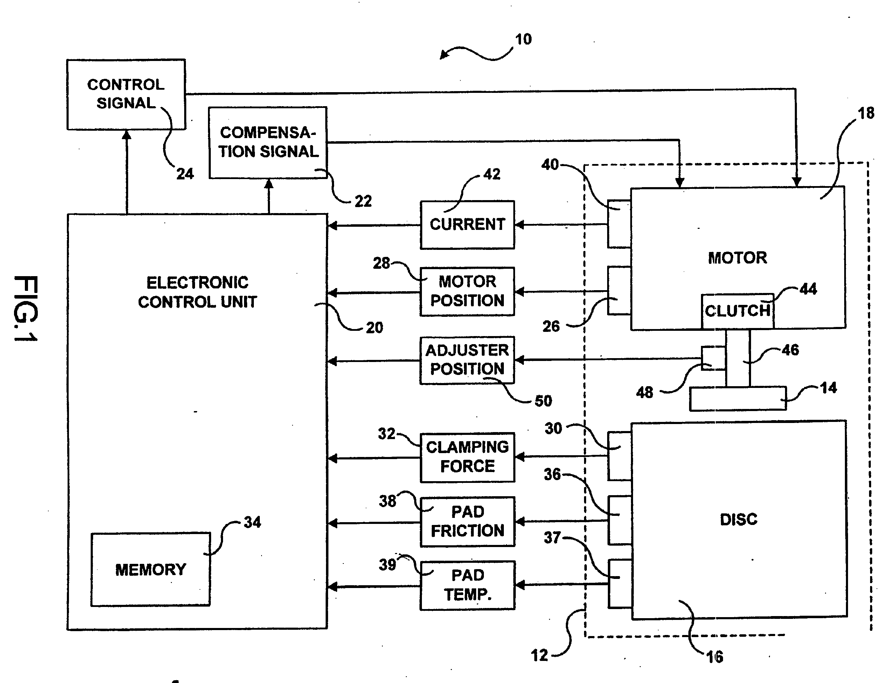

Referring first to Figure 1, a brake monitoring and control system 10 in accordance with an embodiment of the present invention is shown. The brake 12 shown in Figure 1 is of the disc brake type and includes a brake pad 14 adapted to frictionally engage a brake disc 16 when the brake is applied. As such disc brakes are extremely well known in the art, a detailed description thereof is not provided herein. It will also be noted that the brake 12 shown in Figure 1 is of the electromechanical brake type, which includes a motor 18 operatively attached to the brake pad 14, the motor 18 causing the brake pad 14 to move in response to electrical signals received from an electronic control unit 20 as described more fully below. As such electromechanical brakes are also well known in the art, a detailed description thereof is not provided herein. It should also be noted that brake 12 in general is shown schematically, as the specific design of brake 12 and the various components thereof (e.g., the caliper, the actuator, the disc, the pad, etc.) are not important to operation of system 10.

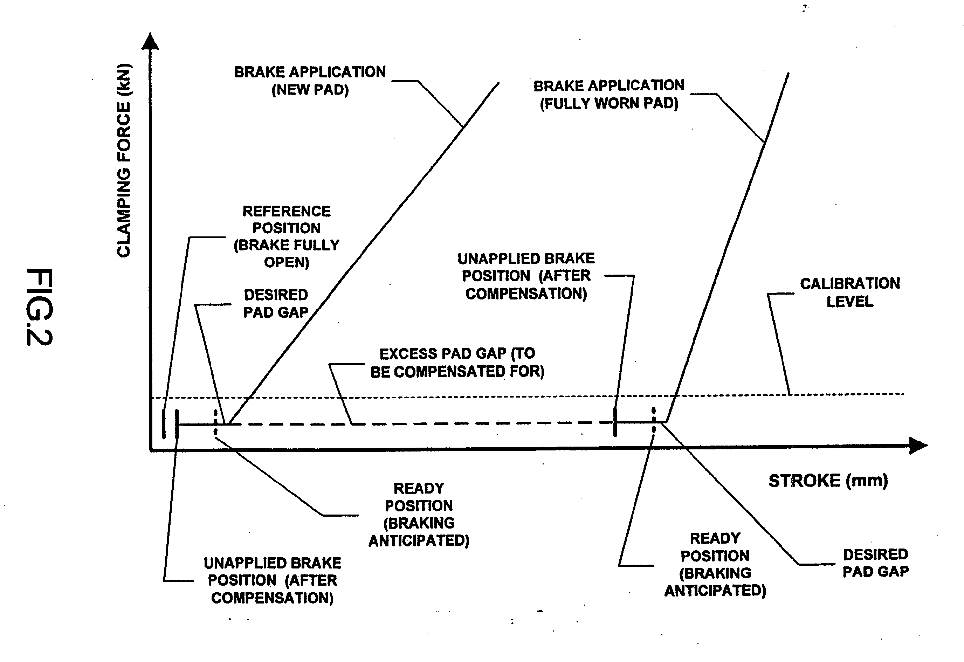

As graphically shown in Figure 2, the brake has a fully open position, to which it may be moved, for example, when the brake pad is to be changed. This fully open position may be used by electronic control unit 20 as a reference position, as this fully open position is generally fixed (i.e., not dependent upon a level of brake wear). Also as is shown in Figure 2, it is generally desirable that a desired gap be provided between the brake pad and the disc when the brake is in an unapplied position. When the brake is applied, the brake pad is caused to move through the desired gap until it just contacts the disc, at which point a clamping force is applied. As the brake pad is moved further toward the disc, the clamping force increases. Although it is shown in Figure 2 that the clamping force increases linearly with respect to stroke distance, it should be understood that such is not always the case and such is not required for system 10 to operate.

Generally, the unapplied position will be closer to the disc than the fully open position. Thus, even with a new pad, the unapplied position is at least slightly displaced from the reference position. As the pad wears, the unapplied position shifts in order to accommodate the brake pad wear, as shown in Figure 2. As such, the unapplied position for a new pad may be dramatically different than the unapplied position for a fully worn pad. The distance between the reference position and the unapplied position generally represents an excess pad gap, which is compensated for by a compensation signal generated by the electronic control unit 20 as described more fully below.

Electronic control unit 20 thus has at least two main functions in system 10 -- electronic control unit 20 causes the brake pad 14 to be located in the unapplied position by generating a compensation signal 22, and electronic control unit 20 causes the brake pad 14 to move to an applied position by generating a control signal 24. More specifically, the electronic control unit 20 receives, from a motor position sensor 26, motor position indicative signals 28 indicative of an angular position of the motor 18 when the brake pad 14 is in the applied position, and calculates the compensation signal 22 based at least in part upon the angular position of the motor 18 when the brake pad 14 is in the applied position. In making this calculation, the electronic control unit 20 preferably also takes into account an angular displacement of the motor 18 relative to the angular position of the motor when the brake pad is in the applied position, which angular displacement is of an extent necessary to create the desired pad gap between the brake pad 14 and the disc 12, as well as the angular position of the motor corresponding to the reference position of the brake pad 14. Even more specifically, the electronic control unit 20 may calculate the compensation signal 22 based at least in part upon a difference between the angular position of the motor when the brake pad is in the applied position and the angular reference position of the motor, less the angular displacement of the motor which creates the desired pad gap.

Once the compensation signal 22 has been calculated, a clutch 44 (an electromagnetic clutch in some embodiments) may be engaged between the motor and an adjuster mechanism 46 in order to compensate for wear. Preferably, such compensation takes place during slack movement when no clamping force is applied. As many designs for such clutches 44 and adjuster mechanisms 46 are well known in the art, the configuration and operation thereof are not described in detail herein.

As mentioned above, and as best understood with reference to Figure 2, the difference between the angular position of the motor when the brake pad is in the applied position and the angular position of the motor when the brake pad is in the unapplied position defines a desired pad gap. Moreover, the difference between the angular position of the motor when the brake pad is in the unapplied position and the angular reference position of the motor defines an excess pad gap. The compensation signal generally corresponds to the excess pad gap. The control signal is generated by the electronic control unit 20 in response to vehicle operator input, as is typically the case in brake systems.

The motor position sensor 26 may be integral with the motor 18. In some embodiments, the applied position of the brake pad 14 is determined as a position of the brake pad 14 when a calibration level of clamping force (see Figure 2) is exerted. In these embodiments, a clamping force sensor 30 is provided which generates and transmits to electronic control unit 20 a clamping force indicative signal 32 indicative of a clamping force exerted by the brake pad 14 on the brake disc 16.

When the system 10 includes the clamping force sensor 30 the electronic control unit 20 preferably receives the motor position indicative signals 28 and the clamping force indicative signals 32 when the brake is applied and determines an extent of wear of the brake pad 14 based at least in part upon a relationship between the motor position indicative signals 28 and the clamping force indicative signals 32. Such may be accomplished in a number of ways. For example, the electronic control unit 20 may compare the relationship between the received position indicative signals 28 and the clamping force indicative signals 32 with at least one relationship stored in a memory 34 in order to determine an extent of wear of the brake pad 14.

Another way for the level of wear to be determined is if the electronic control unit 20 receives first position indicative signals 28 and first clamping force indicative signals 32 when the brake is applied to a first extent and determines a first relationship between the first position indicative signals and the first clamping force indicative signals, receives second position indicative signals 28 and second clamping force indicative signals 32 when the brake is applied to a second extent and determines a second relationship between the second position indicative signals and the second clamping force indicative signals, and determines an extent of wear of the brake pad 14 based at least in part upon a relationship between the first relationship and the second relationship. More specifically, the electronic control unit 20 may, for example, determine a slope of the line (when the relationship is linear) representing the clamping force versus stroke of the brake pad. This slope may then be compared with a value for the slope corresponding to various wear conditions stored in the memory 34. For example, as shown in Figure 2, the slope for the line associated with a fully worn pad will generally be greater than the slope of the line associated with a new pad, since there is less potential deformation in a fully worn (i.e., thin) pad than in a new (i.e., thicker) pad.

In the system described thus far, it will be noted that the only fixed reference in the system is when the brake is fully opened (i.e., when installing new pads) and the motor is stopped going backwards by current limitation. It should also be noted that there are several techniques that may be employed in determining the position of the brake with respect to this fixed reference. One of such techniques involves the use of a "stroke position" technique. In this technique, a "position counter" is employed, with the position counter being set to zero when the brake is in the fixed reference (i.e., the fully open) position. Then the brake is in operation and the wear is compensated for, and the "position counter" incrementally counts up until the pads are fully worn. The only way of checking the signal during this condition is to fully open the brake unit once more (i.e., reset the counter).

In order to avoid this and to provide even better wear compensation, an "absolute position" technique may be employed. Using this technique, an additional sensor 48 (a magnetic sensor in some embodiments) is provided for sensing the rotation of the adjuster mechanism 46 (preferably while the electromagnetic clutch 44 is engaged). The output of sensor 48, which provides a feedback signal 50 indicative of the position of the adjuster mechanism 46 may be employed by electronic control unit 20 to provide an even more accurate calculation of the pad wear. The feedback signal 50 may optionally be improved upon if the information from sensor 48 is combined with information from the non-volatile memory 34 where the total length of pad adjustment operations since the pad was changed is stored. In addition, diagnostics of the sensor signal 50 and/or the pad adjuster mechanism or a simplified sensor 48 may optionally be achieved from the combination of the non-volatile memory 34 and sensor 48 information. Furthermore, the method to calculate the total length of pad adjustment could optionally employ the motor position signal 28.

The electronic control unit 20 may compare the extent of wear of the brake pad 14 with an expected extent of wear stored in the memory 34 in order to evaluate whether a brake failure has occurred and/or whether something is amiss with the brake pad 14.

System 10 may also include a friction sensor 36 which generates friction indicative signals 38 indicative of a level of friction between the brake pad 14 and the brake disc 16 when the brake is applied, and/or may include a temperature sensor 37 which generates temperature indicative signals 39 indicative of the temperature of the brake pad 14 and/or other components of system 10. The electronic control unit 20 may evaluate a quality of the brake pad 14 based at least in part upon the friction indicative signals 38 and/or the temperature indicative signals 39. More specifically, the electronic control unit 20 may evaluate the quality of the brake pad 14 by comparing the friction indicative signals 38 to at least one level of friction stored in the memory 34 and/or by comparing the temperature indicative signals 39 to at least one temperature stored in the memory 34. For example, if more or less friction than expected is occurring and/or the pad temperature is higher or lower than expected, it may be determined that something is amiss with the brake pad 14. In addition, by comparing the control position of the motor (calibrated at a specific force-level) and the compensated position, the effect of heat to pads and rotors or the temperature can be roughly estimated.

Alternately, friction indicative signals 38 may be calculated from motor current signal 42 (which is proportional to motor torque) and motor position signal 28 in a brake actuator having a known mechanical geometry. If such is the case, there friction sensor 36 may be dispensed with. Moreover, by monitoring the force/position relation, the "elasticity" of the brake assembly can be continuously checked and compared (e.g., indicating structural defects, excessive loss or fracture of pad material and the like).

Moreover, the electronic control unit 20 may calculate or adjust compensation signal 22 based at least in part upon the sensed temperature. More specifically, as is well known, the temperature of the pad and/or other parts of system 10 may cause those parts to change size and/or shape; in general, materials will expand when heated and contract when cooled. As such, the compensation signal may not be completely accurate if it does not take temperature into account. For example, when various system components are warmer (and therefore larger), the pad may be closer to the disc than expected, and therefore, the pad gap may be smaller than desired. Conversely, when various system components are cooler (and therefore smaller), the pad may be farther from the disc than expected, and therefore, the pad gap may be larger than desired. Electronic control unit 20 may account for such thermal expansion and contraction by calculating or adjusting compensation signal 22 based at least in part upon the sensed temperature. This will provide a consistent pedal feel and reduce brake fade no matter what the temperature of system components.

System 10 may also include a motor current sensor 40 which generates motor current indicative signals 42 indicative of a level of current passing through the motor 18 when the brake is applied. The electronic control unit 20 may evaluate a quality of the brake pad 14 based at least in part upon the motor position indicative signals 28 and the motor current indicative signals 42. For example, if the relationship between the motor position indicative signals 28 and the motor current indicative signals 42 is different than expected, it may be determined that something is amiss with the brake pad 14.

Referring again to Figure 2 in particular, the brake may optionally also include a ready position, to which it may be moved, for example, when braking is anticipated. For example, braking may be anticipated when a driver's foot is removed from the accelerator pedal, when the driver's foot contacts the brake pedal (even though the brake pedal has not been actuated enough to cause application of the brake), or when any of a number of other conditions are sensed. Generally, the ready position will be closer to the disc than the unapplied position, such that the extent of the desired pad gap is reduced. For purposes of example only and not limitation, the desired pad gap when the brake is in the unapplied position may be 1.8 mm, while the desired pad gap when the brake is in the ready position may be 0.2 mm. Thus, because of the shorter distance that must be traveled to apply the brake, faster application can be achieved by provision of the ready position.

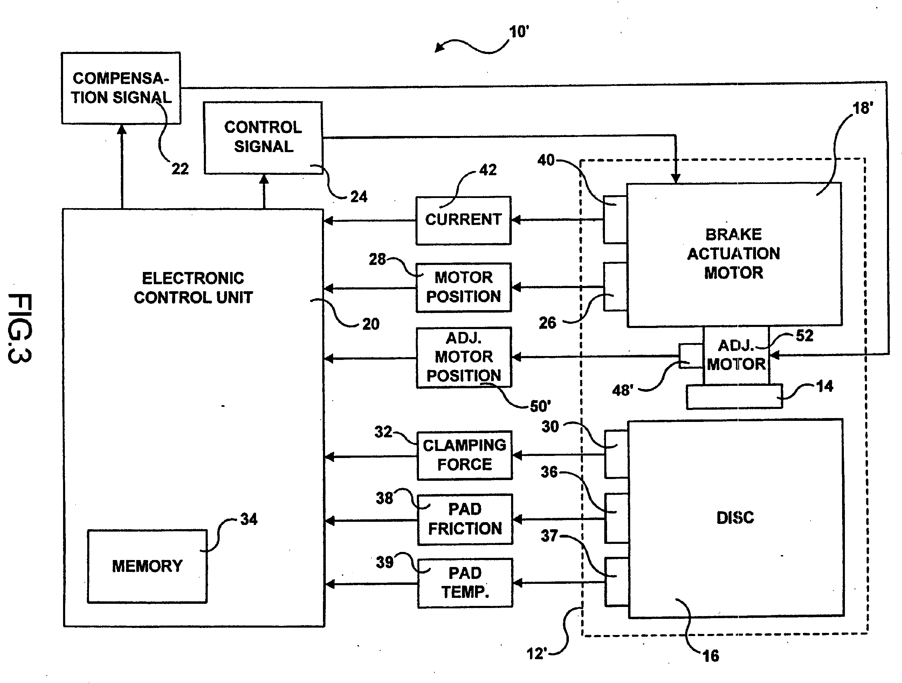

Referring now to Figure 3, a brake monitoring and control system 10' in accordance with another embodiment of the present invention is shown. This embodiment is similar in many respects to system 10 shown in Figure 1, and like elements are referred to using like reference numerals. The main difference between system 10' shown in Figure 3 and system 10 shown in Figure 1 is that while in system 10 brake pad compensation is achieved using an adjuster mechanism 46 driven by motor 18 via a clutch 44, in system 10' a second, adjusting motor 52 is employed for this purpose. Thus, rather than compensation signal 22 being provided to brake adjusting motor 18', compensation signal 22 is provided directly to adjusting motor 52, which then causing brake pad 14 to be located in the unapplied position in response thereto as described above.

Similar to the way sensor 48 may be provided for sensing the rotation of the adjuster mechanism 46 in system 10 described above, a sensor 48' (which may comprise an angular position sensor), the output of which provides a feedback signal 50' indicative of the position of the adjusting motor 52. Signal 50' may be employed by electronic control unit 20 to provide an even more accurate calculation of the pad wear.

The present invention, therefore, provides a brake monitoring and control system which includes brake pad wear indicator functionality, which does not employ a brake pad wear sensor that is either associated with or part of the friction pad(s) and/or has a portion worn away along with the friction pad, which includes brake adjustment functionality to compensate for brake pad wear, which is not relatively complex and therefore not likely prone to failure and/or expensive to install and maintain, which does not require additional components that do not already form part of the braking system, and which is compatible with electrically actuated braking systems.

## Claims

1. A brake monitoring and control system comprising:
a brake pad adapted to frictionally engage a brake disc when the brake is applied;
a motor operatively attached to said brake pad, said motor causing said brake pad to be located in an unapplied position in response to a compensation signal and causing said brake pad to move to an applied position in response to a control signal; and
and an electronic control unit in communication with said motors, said electronic control unit receiving, from a motor position sensor, motor position indicative signals indicative of an angular position of said motor when said brake pad is in the applied position, and calculating the compensation signal based at least in part upon the angular position of said motor when said brake pad is in the applied position,
**characterised in that** said electronic control unit calculates the compensation signal at least in part upon an angularly fixed reference position of said motor, the reference position being independent of the wear on said brake pad and said brake disc, and further based at least in part upon an angular displacement of said motor relative to the angular position of said motor when said brake pad is in the applied position, which angular displacement is of an extent necessary to create a desired pad gap between said brake pad and the disc.

2. The system of claim 1, wherein said electronic control unit calculates the compensation signal based at least in part upon a difference between the angular position of said motor when said brake pad is in the applied position and the angular fixed reference position of said motor relative to the brake disc, less the angular displacement of said motor which creates the desired pad gap.

3. The system of claim 1, wherein a difference between the angular position of said motor when said brake pad is in the applied position and the angular position of said motor when said brake pad is in the unapplied position defines a desired pad gap.

4. The system of claim 1, wherein a difference between the angular position of said motor when said brake pad is in the unapplied position and the angular fixed reference position of said motor relative to the brake disc defines an excess pad gap.

5. The system of claim 4, wherein the compensation signal corresponds to the excess pad gap.

6. The system of claim 1, wherein the motor position sensor is integral with said motor.

7. The system of claim 1, wherein the applied position of said brake pad comprises a position of said brake pad when a calibration level of clamping force is exerted.

8. The system of claim 1, wherein said motor causes said brake pad to be located in the unapplied position in response to the compensation signal by selective engagement of a clutch disposed between the motor and an adjuster mechanism.

9. The system of claim 8, wherein said electronic control unit calculates the compensation signal further based at least in part upon a position of at least a portion of the adjuster mechanism.

10. The system of claim 9, further comprising a sensor for detecting the position of at least a portion of the adjuster mechanism.

11. The system of claim 1, wherein the system further comprises friction indicative signals indicative of a level of friction between said brake pad and the brake disc when the brake is applied, and wherein said electronic control unit evaluates a quality of said brake pad based at least in part upon the friction indicative signals.

12. The system of claim 1, wherein the system further comprises a temperature sensor which generates temperature indicative signals indicative of a temperature of said brake pad, and wherein said electronic control unit evaluates a quality of said brake pad based at least in part upon the temperature indicative signals.

13. The system of claim 1, wherein said motor causes said brake pad to move to a ready position when braking is anticipated.

14. The system of claim 1, wherein said electronic control unit calculates or adjusts the compensation signal based at least in part upon sensed temperature within said system.

15. The system of claim 1, wherein the system further comprises a motor current sensor which generates motor current indicative signals indicative of a level of current passing through said motor when the brake is applied, and wherein said electronic control unit evaluates a quality of said brake pad based at least in part upon the motor position indicative signals and the motor current indicative signals.

16. The system of claim 1, wherein said electronic control unit compares the compensation signal with an expected compensation signal stored in a memory in order to evaluate whether a brake failure has occurred.

17. The system of claim 1, further comprising a clamping force sensor which generates clamping force indicative signals indicative of a clamping force exerted by said brake pad on the brake disc, and wherein said electronic control unit receives the motor position indicative signals and the clamping force indicative signals when the brake is applied and determines an extent of wear of said brake pad based at least in part upon a relationship between the motor position indicative signals and the clamping force indicative signals.

18. A method for brake monitoring and control, said method comprising the steps of:
providing a brake pad adapted to frictionally engage a brake disc when the brake is applied;
proving a motor operatively attached to the brake pad, the motor causing the brake pad to be located in an unapplied position in response to a compensation signal and causing the brake pad to move to an applied position in response to a control signal;
receiving, from a motor position sensor, motor position indicative signals indicative of an angular position of the motor when the brake pad is in the applied position; **characterised by**
calculating the compensation signal based at least in part upon the angular position of the motor when the brake pad is in the applied position and at least in part upon an angularly fixed reference position of said motor the reference position being independent of the wear on said brake pad and said brake disc, and further based at least in part upon an angular displacement of the motor relative to the angular position of the motor when the brake pad is in the applied position, which angular displacement is of an extent necessary to create a desired pad gap between the brake pad and the disc.

19. The method of claim 18, wherein the compensation signal is calculated based at least in part upon a difference between the angular position of the motor when the brake pad is in the applied position and the angular fixed reference position of the motor relative to the brake disc, less the angular displacement of the motor which creates the desired pad gap.

20. The method of claim 18, wherein a difference between the angular position of the motor when the brake pad is in the applied position and the angular position of the motor when the brake pad is in the unapplied position defines a desired pad gap.

21. The method of claim 18, wherein a difference between the angular position of the motor when the brake pad is in the unapplied position and the angular fixed reference position of the motor relative to the brake disc defines an excess pad gap.

22. The method of claim 21, wherein the compensation signal corresponds to the excess pad gap.

23. The method of claim 18, wherein the motor position sensor is integral with the motor.

24. The method of claim 18, wherein the applied position of the brake pad comprises a position of the brake pad when a calibration level of clamping force is exerted.

25. The method of claim 18, wherein the motor causes the brake pad to be located in the unapplied position in response to the compensation signal by selective engagement of a clutch disposed between the motor and an adjuster mechanism.

26. The method of claim 25, wherein the electronic control unit calculates the compensation signal further based at least in part upon a position of at least a portion of the adjuster mechanism.

27. The method of claim 26, further comprising the step of detecting the position of at least a portion of the adjuster mechanism with a sensor.

28. The method of claim 18, wherein the method further comprises the steps of:
generating friction indicative signals indicative of a level of friction between the brake pad and the brake disc when the brake is applied; and
evaluating a quality of the brake pad based at least in part upon the friction indicative signals.

29. The method of claim 18, wherein the method further comprises the steps of:
generating temperature indicative signals indicative of a temperature of the brake pad; and
evaluating a quality of the brake pad based at least in part upon the temperature indicative signals.

30. The method of claim 18, wherein the motor causes the brake pad to move to a ready position when braking is anticipated.

31. The method of claim 18, wherein the electronic control unit calculates or adjusts the compensation signal based at least in part upon a sensed temperature.

32. The method of claim 18, wherein the method further comprises the steps of:
generating motor current indicative signals indicative of a level of current passing through the motor when the brake is applied; and
evaluating a quality of the brake pad based at least in part upon the motor position indicative signals and the motor current indicative signals.

33. The method of claim 18, further comprising the step of comparing the compensation signal with an expected compensation signal stored in a memory in order to evaluate whether a brake failure has occurred.

34. The method of claim 18, further comprising the steps of:
generating clamping force indicative signals indicative of a clamping force exerted by the brake pad on the brake disc; and
receiving the motor position indicdatrive signals and the clamping force indicative signals when the brake is applied and determining an extent of wear of the brake pad based at least in part upon a relationship between the motor position indicative signals and the clamping force indicative signals.

## Patentansprüche

1. Überwachungs- und Steuer- oder Regelsystem für eine Bremse mit:
einer Bremsbacke, die geeignet gestaltet ist zur reibenden Wechselwirkung mit einer Bremsscheibe, wenn die Bremse betätigt wird;
einem Motor, der betrieblich an der Bremsbacke befestigt ist, wobei der Motor verursacht, dass die Bremsbacke in Reaktion auf ein oder in Abhängigkeit von einem Kompensationssignal in einer nicht betätigten Position angeordnet wird und dass sich die Bremsbacke in Reaktion auf ein oder in Abhängigkeit von einem Steuer- oder Regelsignal in eine betätigte Position bewegt; und
einer elektronischen Steuer- oder Regeleinheit (im Folgenden "Steuereinheit") in Kommunikation mit dem Motor, wobei die elektronische Steuereinheit von einem Positionssensor des Motors ein die Position des Motors indizierendes Signal empfängt, welches eine Winkelposition des Motors indiziert, wenn sich die Bremsbacke in der betätigten Position befindet, und zumindest teilweise auf Basis der Winkelposition des Motors ein Kompensationssignal berechnet, wenn sich die Bremsbacke in der betätigten Position befindet,
**dadurch gekennzeichnet, dass**
die elektronische Steuereinheit das Kompensationssignal zumindest teilweise auf Basis einer hinsichtlich des Winkels fixen Referenzposition des Motors, wobei die Referenzposition unabhängig ist von dem Verschleiß der Bremsbacke und der Bremsscheibe, sowie zumindest teilweise auf Basis einer Winkelveränderung des Motors relativ zu der Winkelposition des Motors, wenn sich die Bremsbacke in der betätigten Position befindet, berechnet, wobei die Winkelveränderung in einem Ausmaß erfolgt, das erforderlich ist zur Erzeugung eines gewünschten Backenspalts zwischen der Bremsbacke und der Scheibe.

2. System nach Anspruch 1, **dadurch gekennzeichnet, dass** die elektronische Steuereinheit das Kompensationssignal berechnet zumindest teilweise auf Basis einer Differenz zwischen der Winkelposition des Motors, wenn sich die Bremsbacke in der betätigten Position befindet, und der hinsichtlich des Winkels fixen Referenzposition des Motors relativ zu der Bremsscheibe, vermindert um die Winkelveränderung des Motors, die den gewünschten Backenspalt erzeugt.

3. System nach Anspruch 1, **dadurch gekennzeichnet, dass** eine Differenz zwischen der Winkelposition des Motors bei Bremsbacke in der betätigten Position und der Winkelposition des Motors bei Bremsbacke in der nicht betätigten Position einen gewünschten Backenspalt definiert.

4. System nach Anspruch 1, **dadurch gekennzeichnet, dass** eine Differenz zwischen der Winkelposition des Motors bei nicht betätigter Bremsbacke und die hinsichtlich des Winkels fixe Referenzposition des Motors relativ zu der Bremsscheibe einen Überschuss - Backenspalt definiert.

5. System nach Anspruch 4, **dadurch gekennzeichnet, dass** das Kompensationssignal mit dem Überschuss - Backenspalt korrespondiert.

6. System nach Anspruch 1, **dadurch gekennzeichnet, dass** der Positionssensor des Motors integraler Bestandteil des Motors ist.

7. System nach Anspruch 1, **dadurch gekennzeichnet, dass** die betätigte Position der Bremsbacke eine Position der Bremsbacke aufweist oder dieser entspricht, wenn ein Kalibrier-Level einer Klemmkraft aufgebracht wird.

8. System nach Anspruch 1, **dadurch gekennzeichnet, dass** der Motor verursacht, dass die Bremsbacke in Abhängigkeit des Kompensationssignals durch selektives Einrücken einer Kupplung, die zwischen dem Motor und einem Einstellmechanismus angeordnet ist, in der nicht betätigten Position angeordnet wird.

9. System nach Anspruch 8, wobei die elektronische Steuereinheit das Kompensationssignal auch zumindest teilweise auf Basis einer Position von zumindest einem Teil oder Bereich des Einstell- oder Anpassungsmechanismus berechnet.

10. System nach Anspruch 9, **dadurch gekennzeichnet, dass** ein Sensor vorhanden ist zur Detektierung der Position zumindest eines Teils oder Bereichs des Einstellmechanismus.

11. System nach Anspruch 1, **dadurch gekennzeichnet, dass** das System Reibung indizierende Signale aufweist, die ein Reiblevel zwischen der Bremsbacke und der Bremsscheibe indizieren, wenn die Bremse betätigt ist, wobei die elektronische Steuereinheit eine Qualität der Bremsbacke zumindest teilweise auf Basis des die Reibung indizierenden Signals evaluiert.

12. System nach Anspruch 1, **dadurch gekennzeichnet, dass** das System auch einen Temperatursensor aufweist, der die Temperatur indizierende Signale erzeugt, die eine Temperatur der Bremsbacke indizieren, und wobei die elektronische Steuereinheit eine Qualität der Bremsbacke zumindest teilweise auf Basis des die Temperatur indizierenden Signals evaluiert.

13. System nach Anspruch 1, **dadurch gekennzeichnet, dass** der Motor verursacht, dass die Bremsbacke zu einer betriebsbereiten Position bewegt wird, wenn ein Bremsen antizipiert wird.

14. System nach Anspruch 1, **dadurch gekennzeichnet, dass** die elektronische Steuereinheit das Kompensationssignal zumindest teilweise auf Basis einer sensierten Temperatur in dem System berechnet und/oder anpasst.

15. System nach Anspruch 1, **dadurch gekennzeichnet, dass** das System weiterhin einen Motorstrom-Sensor aufweist, welcher ein den Motorstrom indizierendes Signal generiert, welches ein Level des Stroms, der durch den Motor hindurchtritt, wenn die Bremse betätigt wird, indiziert, und dass die elektronische Steuereinheit eine Qualität der Bremsbacke zumindest teilweise auf Basis der die Motorposition indizierenden Signale und der den Motorstrom indizierenden Signale evaluiert.

16. System nach Anspruch 1, **dadurch gekennzeichnet, dass** die elektronische Steuereinheit das Kompensationssignal mit einem erwarteten Kompensationssignal, welches in einem Speicher gespeichert ist, vergleicht, um zu evaluieren, ob ein Bremsversagen aufgetreten ist.

17. System nach Anspruch 1 mit einem Klemmkraft-Sensor, der die Klemmkraft indizierende Signale erzeugt, die eine Klemmkraft indizieren, die durch die Bremsbacke auf die Bremsscheibe ausgeübt wird, wobei die elektronische Steuereinheit die die Position des Motors indizierenden Signale und die die Klemmkraft indizierenden Signale empfängt, wenn die Bremse betätigt wird, und zumindest teilweise auf Basis einer Beziehung zwischen den die Position des Motors indizierenden Signalen und den die Klemmkraft indizierenden Signalen ein Ausmaß des Verschleißes der Bremsbacke ermittelt.

18. Verfahren zur Überwachung und Steuerung oder Regelung einer Bremse mit folgenden Verfahrensschritten:
Bereitstellen einer Bremsbacke, die geeignet für eine reibende Wechselwirkung mit einer Bremsscheibe bei Betätigung der Bremse gestaltet ist;
Bereitstellen eines Motors, der betrieblich an der Bremsbacke befestigt ist, wobei der Motor verursacht, dass die Bremsbacke in Abhängigkeit von einem oder in Reaktion auf ein Kompensationssignal in einer nicht betätigten Position angeordnet wird und dass sich die Bremsbacke in Abhängigkeit eines Steuersignals in eine betätigte Position bewegt;
Empfangen von eine Motorposition indizierenden Signalen, die eine Winkelposition des Motors indizieren, wenn die Bremsbacke sich in der betätigten Position befindet, von einem Motorpositions-Sensor,
**dadurch gekennzeichnet, dass**
das Kompensationssignal zumindest teilweise auf Basis der Winkelposition des Motors, wenn sich die Bremsbacke in der betätigten Position befindet, und zumindest teilweise auf Basis einer hinsichtlich des Winkels fixen Referenzposition des Motors, wobei die Referenzposition unabhängig ist von dem Verschleiß der Bremsbacke und der Bremsscheibe, sowie zumindest teilweise auf Basis einer Winkelveränderung des Motors relativ zu der Winkelposition des Motors, wenn sich die Bremsbacke in der betätigten Position befindet, wobei die Winkelveränderung in einem Ausmaß erfolgt, das erforderlich ist zur Erzeugung eines gewünschten Backenspalts zwischen der Bremsbacke und der Scheibe, berechnet wird.

19. Verfahren nach Anspruch 18, **dadurch gekennzeichnet, dass** das Kompensationssignal zumindest teilweise auf Basis einer Differenz zwischen der Winkelposition des Motors, wenn sich die Bremsbacke in der betätigten Position befindet, und der hinsichtlich des Winkels fixen Referenzposition des Motors relativ zu der Bremsscheibe vermindert um die Winkelveränderung des Motors, die den gewünschten Backenspalt erzeugt, berechnet wird.

20. Verfahren nach Anspruch 18, **dadurch gekennzeichnet, dass** eine Differenz zwischen der Winkelposition des Motors bei Bremsbacke in der betätigten Position und der Winkelposition des Motors bei Bremsbacke in der nicht betätigten Position einen gewünschten Backenspalt definiert.

21. Verfahren nach Anspruch 18, **dadurch gekennzeichnet, dass** eine Differenz zwischen der Winkelposition des Motors bei Bremsbacke in nicht betätigter Position und der hinsichtlich des Winkels fixen Referenzposition des Motors relativ zu der Bremsscheibe einen Überschuss-Backenspalt definiert.

22. Verfahren nach Anspruch 21, **dadurch gekennzeichnet, dass** das Kompensationssignal mit dem Überschuss-Backenspalt korrespondiert.

23. Verfahren nach Anspruch 18, **dadurch gekennzeichnet, dass** der Sensor für die Motorposition ein integraler Bestandteil des Motors ist.

24. Verfahren nach Anspruch 18, **dadurch gekennzeichnet, dass** die betätigte Position der Bremsbacke eine Position der Bremsbacke aufweist oder dieser entspricht, wenn ein Kalibrier-Level der Klemmkraft aufgebracht wird oder ist.

25. Verfahren nach Anspruch 18, **dadurch gekennzeichnet, dass** der Motor verursacht, dass die Bremsbacke in Abhängigkeit des Kompensationssignals durch selektives Einrücken einer Kupplung, die zwischen dem Motor und einem Einstellmechanismus angeordnet ist, in der nicht betätigten Position angeordnet wird.

26. Verfahren nach Anspruch 25, **dadurch gekennzeichnet, dass** die elektronische Steuereinheit das Kompensationssignal auch zumindest teilweise auf Basis einer Position zumindest eines Teils des Einstellmechanismus berechnet.

27. Verfahren nach Anspruch 26, **dadurch gekennzeichnet, dass** auch ein Verfahrensschritt eines Detektierens der Position zumindest eines Teils des Einstellmechanismus mit einem Sensor durchgeführt wird.

28. Verfahren nach Anspruch 18, **dadurch gekennzeichnet, dass** das Verfahren auch folgende Verfahrensschritte aufweist:
Erzeugung eines eine Reibung indizierenden Signals, welches ein Level der Reibung zwischen der Bremsbacke und der Bremsscheibe indiziert, wenn die Bremse betätigt wird; und
Evaluieren einer Qualität der Bremsbacke zumindest teilweise auf Basis der die Reibung indizierenden Signale.

29. Verfahren nach Anspruch 18, **dadurch gekennzeichnet, dass** das Verfahren die folgenden weiteren Verfahrensschritte aufweist:
Erzeugen von die Temperatur indizierenden Signalen, die eine Temperatur der Bremsbacke indizieren; und
Evaluieren einer Qualität der Bremsbacke zumindest teilweise auf Basis der die Temperatur indizierenden Signale.

30. Verfahren nach Anspruch 18, **dadurch gekennzeichnet, dass** der Motor verursacht, dass sich die Bremsbacke in eine bremsbereite Position bewegt, wenn ein Bremsen antizipiert wird.

31. Verfahren nach Anspruch 18, **dadurch gekennzeichnet, dass** die elektronische Steuereinheit das Kompensationssignal zumindest teilweise auf Basis einer sensierten Temperatur berechnet oder anpasst.

32. Verfahren nach Anspruch 18, **dadurch gekennzeichnet, dass** das Verfahren die folgenden weiteren Verfahrensschritte aufweist:
Erzeugen von den Motorstrom indizierenden Signalen, die ein Level des durch den Motor hindurch tretenden Stroms indizieren, wenn die Bremse betätigt wird; und
Evaluieren einer Qualität der Bremsbacke zumindest teilweise auf Basis der die Motorposition indizierenden Signale und der den Motorstrom indizierenden Signale.

33. Verfahren nach Anspruch 18 mit dem weiteren Verfahrensschritt eines Vergleichens des Kompensationssignals mit einem erwarteten Kompensationssignal, welches in einem Speicher gespeichert ist, um zu evaluieren, ob ein Bremsversagen aufgetreten ist.

34. Verfahren nach Anspruch 18, mit folgenden weiteren Verfahrensschritten:
Erzeugen von die Klemmkraft indizierenden Signalen, die eine Klemmkraft indizieren, die durch die Bremsbacke auf die Bremsscheibe aufgebracht wird; und
Empfangen von die Motorposition indizierenden Signalen und von die Klemmkraft indizierenden Signalen, wenn die Bremse betätigt ist, und Ermitteln eines Ausmaßes eines Verschleißes der Bremsbacke zumindest teilweise auf Basis einer Beziehung zwischen den die Motorposition indizierenden Signalen und den die Klemmkraft indizierenden Signalen.

## Revendications

1. Système de surveillance et de commande de frein, comprenant :
une plaquette de frein adaptée pour entrer en prise avec frottement avec un disque de frein lorsque le frein est serré ;
un moteur fixé de façon opérationnelle à ladite plaquette de frein, ledit moteur entraînant le positionnement de ladite plaquette de frein dans une position desserrée en réponse à un signal de compensation et entraînant le déplacement de ladite plaquette de frein jusqu'à une position serrée en réponse à un signal de commande ; et
une unité de commande électronique en communication avec ledit moteur, ladite unité de commande électronique recevant, à partir d'un capteur de position de moteur, des signaux indicatifs de position de moteur indicatifs d'une position angulaire dudit moteur lorsque ladite plaquette de frein est dans la position serrée, et calculant le signal de compensation en fonction, au moins en partie, de la position angulaire dudit moteur lorsque ladite plaquette de frein est dans la position serrée,
**caractérisé en ce que** ladite unité de commande électronique calcule le signal de compensation en fonction, au moins en partie, d'une position de référence fixée angulairement dudit moteur, la position de référence étant indépendante de l'usure sur ladite plaquette de frein et ledit disque de frein, et en outre en fonction, au moins en partie, d'un déplacement angulaire dudit moteur par rapport à la position angulaire dudit moteur lorsque ladite plaquette de frein est dans la position serrée, lequel déplacement angulaire est d'une ampleur nécessaire pour créer un écart de plaquette souhaité entre ladite plaquette de frein et le disque.

2. Système selon la revendication 1, dans lequel ladite unité de commande électronique calcule le signal de compensation en fonction, au moins en partie, d'une différence entre la position angulaire dudit moteur lorsque ladite plaquette de frein est dans la position serrée et la position de référence fixée angulairement dudit moteur par rapport au disque de frein, moins le déplacement angulaire dudit moteur qui crée l'écart de plaquette souhaité.

3. Système selon la revendication 1, dans lequel une différence entre la position angulaire dudit moteur lorsque ladite plaquette de frein est dans la position serrée et la position angulaire dudit moteur lorsque ladite plaquette de frein est dans la position desserrée définit un écart de plaquette souhaité.

4. Système selon la revendication 1, dans lequel une différence entre la position angulaire dudit moteur lorsque ladite plaquette de frein est dans la position desserrée et la position de référence fixée angulairement dudit moteur par rapport au disque de frein définit un excès d'écart de plaquette.

5. Système selon la revendication 4, dans lequel le signal de compensation correspond à l'excès d'écart de plaquette.

6. Système selon la revendication 1, dans lequel le capteur de position de moteur est solidaire dudit moteur.

7. Système selon la revendication 1, dans lequel la position serrée de ladite plaquette de frein comprend une position de ladite plaquette de frein lorsqu'un niveau d'étalonnage de force de serrage est exercé.

8. Système selon la revendication 1, dans lequel ledit moteur entraîne le positionnement de ladite plaquette de frein dans la position desserrée en réponse au signal de compensation par enclenchement sélectif d'un embrayage disposé entre le moteur et un mécanisme régleur.

9. Système selon la revendication 8, dans lequel ladite unité de commande électronique calcule le signal de compensation en outre en fonction, au moins en partie, d'une position d'au moins une partie du mécanisme régleur.

10. Système selon la revendication 9, comprenant en outre un capteur pour détecter la position d'au moins une partie du mécanisme régleur.

11. Système selon la revendication 1, dans lequel le système comprend en outre des signaux indicatifs de frottement indicatifs d'un niveau de frottement entre ladite plaquette de frein et le disque de frein lorsque le frein est serré, et dans lequel ladite unité de commande électronique évalue une qualité de ladite plaquette de frein en fonction, au moins en partie, des signaux indicatifs de frottement.

12. Système selon la revendication 1, dans lequel le système comprend en outre un capteur de température qui génère des signaux indicatifs de température indicatifs d'une température de ladite plaquette de frein, et dans lequel ladite unité de commande électronique évalue une qualité de ladite plaquette de frein en fonction, au moins en partie, des signaux indicatifs de température.

13. Système selon la revendication 1, dans lequel ledit moteur entraîne le déplacement de ladite plaquette de frein jusqu'à une position prête lorsqu'un freinage est anticipé.

14. Système selon la revendication 1, dans lequel ladite unité de commande électronique calcule ou règle le signal de compensation en fonction, au moins en partie, de température détectée à l'intérieur dudit système.

15. Système selon la revendication 1, dans lequel le système comprend en outre un capteur de courant de moteur qui génère des signaux indicatifs de courant de moteur indicatifs d'un niveau de courant passant à travers ledit moteur lorsque le frein est serré, et dans lequel ladite unité de commande électronique évalue une qualité de ladite plaquette de frein en fonction, au moins en partie, des signaux indicatifs de position de moteur et des signaux indicatifs de courant de moteur.

16. Système selon la revendication 1, dans lequel ladite unité de commande électronique compare le signal de compensation à un signal de compensation prévu stocké dans une mémoire afin d'évaluer si une panne de frein s'est produite.

17. Système selon la revendication 1, comprenant en outre un capteur de force de serrage qui génère des signaux indicatifs de force de serrage indicatifs d'une force de serrage exercée par ladite plaquette de frein sur le disque de frein, et dans lequel ladite unité de commande électronique reçoit les signaux indicatifs de position de moteur et les signaux indicatifs de force de serrage lorsque le frein est serré et détermine une ampleur d'usure de ladite plaquette de frein en fonction, au moins en partie, d'une relation entre les signaux indicatifs de position de moteur et les signaux indicatifs de force de serrage.

18. Procédé de surveillance et de commande de frein, ledit procédé comprenant les étapes consistant à :
fournir une plaquette de frein adaptée pour entrer en prise avec frottement avec un disque de frein lorsque le frein est serré ;
fournir un moteur fixé de façon opérationnelle à la plaquette de frein, le moteur entraînant le positionnement de la plaquette de frein dans une position desserrée en réponse à un signal de compensation et entraînant le déplacement de la plaquette de frein jusqu'à une position serrée en réponse à un signal de commande ;
recevoir, à partir d'un capteur de position de moteur, des signaux indicatifs de position de moteur indicatifs d'une position angulaire du moteur lorsque la plaquette de frein est dans la position serrée ; **caractérisé par** l'étape consistant à
calculer le signal de compensation en fonction, au moins en partie, de la position angulaire du moteur lorsque la plaquette de frein est dans la position serrée et en fonction, au moins en partie, d'une position de référence fixée angulairement dudit moteur, la position de référence étant indépendante de l'usure sur ladite plaquette de frein et ledit disque de frein, et en outre en fonction, au moins en partie, d'un déplacement angulaire du moteur par rapport à la position angulaire du moteur lorsque la plaquette de frein est dans la position serrée, lequel déplacement angulaire est d'une ampleur nécessaire pour créer un écart de plaquette souhaité entre la plaquette de frein et le disque.

19. Procédé selon la revendication 18, dans lequel le signal de compensation est calculé en fonction, au moins en partie, d'une différence entre la position angulaire du moteur lorsque la plaquette de frein est dans la position serrée et la position de référence fixée angulairement du moteur par rapport au disque de frein, moins le déplacement angulaire du moteur qui crée l'écart de plaquette souhaité.

20. Procédé selon la revendication 18, dans lequel une différence entre la position angulaire du moteur lorsque la plaquette de frein est dans la position serrée et la position angulaire du moteur lorsque la plaquette de frein est dans la position desserrée définit un écart de plaquette souhaité.

21. Procédé selon la revendication 18, dans lequel une différence entre la position angulaire du moteur lorsque la plaquette de frein est dans la position desserrée et la position de référence fixée angulairement du moteur par rapport au disque de frein définit un excès d'écart de plaquette.

22. Procédé selon la revendication 21, dans lequel le signal de compensation correspond à l'excès d'écart de plaquette.

23. Procédé selon la revendication 18, dans lequel le capteur de position de moteur est solidaire du moteur.

24. Procédé selon la revendication 18, dans lequel la position serrée de la plaquette de frein comprend une position de la plaquette de frein lorsqu'un niveau d'étalonnage de force de serrage est exercé.

25. Procédé selon la revendication 18, dans lequel le moteur entraîne le positionnement de la plaquette de frein dans la position desserrée en réponse au signal de compensation par enclenchement sélectif d'un embrayage disposé entre le moteur et un mécanisme régleur.

26. Procédé selon la revendication 25, dans lequel l'unité de commande électronique calcule le signal de compensation en outre en fonction, au moins en partie, d'une position d'au moins une partie du mécanisme régleur.

27. Procédé selon la revendication 26, comprenant en outre l'étape consistant à détecter la position d'au moins une partie du mécanisme régleur avec un capteur.

28. Procédé selon la revendication 18, dans lequel le procédé comprend en outre les étapes consistant à :
générer des signaux indicatifs de frottement indicatifs d'un niveau de frottement entre la plaquette de frein et le disque de frein lorsque le frein est serré ; et
évaluer une qualité de la plaquette de frein en fonction, au moins en partie, des signaux indicatifs de frottement.

29. Procédé selon la revendication 18, dans lequel le procédé comprend en outre les étapes consistant à :
générer des signaux indicatifs de température indicatifs d'une température de la plaquette de frein ; et
évaluer une qualité de la plaquette de frein en fonction, au moins en partie, des signaux indicatifs de température.

30. Procédé selon la revendication 18, dans lequel le moteur entraîne le déplacement de la plaquette de frein jusqu'à une position prête lorsqu'un freinage est anticipé.

31. Procédé selon la revendication 18, dans lequel l'unité de commande électronique calcule ou règle le signal de compensation en fonction, au moins en partie, d'une température détectée.

32. Procédé selon la revendication 18, dans lequel le procédé comprend en outre les étapes consistant à :
générer des signaux indicatifs de courant de moteur indicatifs d'un niveau de courant passant à travers le moteur lorsque le frein est serré ; et
évaluer une qualité de la plaquette de frein en fonction, au moins en partie, des signaux indicatifs de position de moteur et des signaux indicatifs de courant de moteur.

33. Procédé selon la revendication 18, comprenant en outre l'étape consistant à comparer le signal de compensation à un signal de compensation prévu stocké dans une mémoire afin d'évaluer si une panne de frein s'est produite.

34. Procédé selon la revendication 18, comprenant en outre les étapes consistant à :
générer des signaux indicatifs de force de serrage indicatifs d'une force de serrage exercée par la plaquette de frein sur le disque de frein ; et
recevoir les signaux indicatifs de position de moteur et les signaux indicatifs de force de serrage lorsque le frein est serré et déterminer une ampleur d'usure de la plaquette de frein en fonction, au moins en partie, d'une relation entre les signaux indicatifs de position de moteur et les signaux indicatifs de force de serrage.
